# EUROPEAN PATENT SPECIFICATION

(11) **EP 3 679 778 B1**
(45) Date of publication and mention of the grant of the patent: **03.03.2021**
(21) Application number: 19150951.2
(22) Date of filing: 09.01.2019
(51) Int. Cl.: A01C 17/00

(54) **ASSEMBLY FOR A DOSING SYSTEM OF A SPREADER MACHINE FOR DISTRIBUTING A GRANULAR MATERIAL OR THE LIKE, DOSING SYSTEM AND SPREADER MACHINE**
ANORDNUNG FÜR EIN DOSIERUNGSSYSTEM EINER STREUERMASCHINE ZUR VERTEILUNG EINES KÖRNIGEN MATERIALS ODER DERGLEICHEN, DOSIERUNGSSYSTEM UND STREUERMASCHINE
ENSEMBLE POUR SYSTÈME DE DOSAGE D'UNE MACHINE D'ÉPANDEUR DE DISTRIBUTION D'UN MATÉRIAU GRANULAIRE OU SIMILAIRE, SYSTÈME DE DOSAGE ET MACHINE D'ÉPANDEUR

(43) Date of publication of application: 15.07.2020
(73) Proprietor: Kverneland Group Nieuw-Vennep BV, 2153 LR Nieuw-Vennep (NL)
(72) Inventor: Thybaut, Maarten, 2182 TD Hillegom (NL)
(74) Representative: Bittner, Thomas L.

(56) References cited:
- DE-A1-102007 045 905
- US-A- 1 919 619
- US-A1- 2010 200 680
- US-B1- 8 074 904
- US-B2- 7 766 257

## Description

The present disclosure refers to an assembly for a dosing system of a spreader machine for distributing a granular material or the like, a dosing system, and a spreader machine, specifically an agricultural spreader machine.

### Background

Spreader or distributing machines are used for distributing a granular material or the like. In case of an agricultural spreader machine a fertilizer may be distributed. Document EP 0 511 714 A2 refers to a spreader machine which is provided with an arrangement comprising to spreader disk. The granular material to be distributed by the spreader machine is received in a storage container or tank. From the storage container the granular material is provided to the spreader disks. On its way from the storage container to the spreader disk the granular material is dosed by a dosing system, thereby, controlling the amount of granular material distributed per time. The document US 8,074,904 B1 describes a broadcast spreader which includes a directional control assembly that defines a pathway for granular material from a hopper through a discharge port and onto a rotating fan. The directional control assembly includes a first plate that is secured to and adapted for slidable movement with respect to the hopper. The first plate defines an opening therethrough that is substantially in registry with but smaller than the discharge port, thus serving to define a pathway for the granular material from the hopper through the discharge port and onto the fan. The directional control assembly further includes a second plate secured to and adapted for slidable movement with respect to the hopper and the first plate. Movement of the second plate relative to the first plate selectively opens or closes the pathway for the granular material from the hopper through the discharge port and onto the fan.

The document US 2010/200680 A1 discloses a broadcast spreader for control of the flow of granular material to a rotating fan through use of a gate assembly in combination with an auger assembly. The broadcast spreader further includes a means for directing the granular material onto the fan, thus allowing for the shifting of the distribution pattern of the granular material from side to side.

In the document DE 10 2007 045 905 A1, a dosing device for a spreading unit of a centrifugal spreader comprising at least one rotatingly driven throwing disk equipped with throwing vanes is disclosed. The dosing device comprises at least one flow opening which can be adjusted in terms of its opening width and position with respect to the centrifugal disk and which has at least one opening contour. Via the flow opening, the granular material to be discharged, which is located in the storage container assigned to the dosing device can be supplied to the throwing disk in adjustable amounts. Different opening contours for the flow opening are provided.

### Summary

It is an object of the present disclosure to provide an assembly for a dosing system of a spreader machine for distributing a granular material or the like, a dosing system, and a spreader machine which allow for improved dosing of the material to be distributed.

For solving the problem, an assembly for a dosing system of a spreader machine for distributing a granular material according to the independent claim 1 is provided. Further, a dosing system for a spreader machine and a spreader machine according to the claims 11 and 12, respectively, are provided. Further embodiments are disclosed in the dependent claims.

According to the invention, an assembly for a dosing system of a spreader machine for distributing a granular material or the like is provided. The assembly comprises: a first member provided with a first opening; a second member provided with a second opening; and an actuator connected to at least one of the first and second members and configured to provide a driving force for relative movement between the first and second members, thereby, adjusting an opening size of a dosing opening provided by an overlapping area in which the first and second openings are overlapping. The relative movement is conductable or performable by linear movement of at least one of the first and second members.

According to a further to aspect, a dosing system for a spreader machine for distributing a granular material or the like is provided, the dosing system comprising the assembly.

According to still a further aspect, a spreader machine for distributing a granular material or the like is provided, the spreader machine comprising: a storage container for receiving a granular material to be distributed, a spreading device configured for distributing the granular material, and a dosing system configured for dosing the granular material received from the storage container to the spreading device.

The relative movement provided for the first and second members allows for fine adjustment (fine-tuning) of the size of the dosing opening which is defined by the overlapping area for the first and second openings, the overlapping area being adjusted according to the relative position between the first and second members. Linear movement can be applied in small steps supporting exact dosing of the granular material.

If the first and the second members are provided in a first relative position or orientation to each other, the opening size of the dosing opening is providing with a first size. Changing the relative position or orientation of the first and second members to each other will provide them in a second relative position, thereby, establishing a second opening size of the dosing opening different from the first opening size. For amending or adjusting the size the overlapping area in which the first and second openings are overlapping is adjusted. A closed position may be provided for the dosing opening if there is no overlapping between the first and second openings.

The linear movement or motion is provided by a one-dimensional motion or movement along a straight line.

With regard to a throughput of the granular material through the dosing opening, a throughput of at least about 300 kg / min may be provided in operation.

The assembly may comprise a guiding mechanism configured for linearly guiding at least one of the first and second members for the linear movement. The guiding mechanism provided for guidance while the at least one of the members is moved may comprise one or more guiding slots provided, for example, in at least one of the first and second members. Within such guiding slot a pin or projection may be received and guided while the linear movement or motion is conducted.

The assembly may further comprise a first hinge connecting the actuator to the first member. The first hinge may comprise one or more lever arms for connecting the actuator to the first member. In an example an extracting and retracting actuator element of the actuator may be connecting to the first hinge, and, thereby, functioning together with the first hinge for driving linear movement or motion.

The assembly may comprise a second hinge connecting the actuator to the second member. The embodiments or design options outlined for the first hinge above may apply to the second hinge *mutatis mutandis.*

The second member is configured to be forced movable (forced movement) in response to linear movement of the first member, wherein the linear movement is driven by the actuator. If the first member is driven to be moved, such motion of the first member will forcibly cause movement of the second member. In this case relative movement between the first and second members comprises moving both the first and second members. It may be similarly foreseen that the first member is forced to move in case the second member is driven for movement. Thus, synchronized movement or motion of the first and the second members may be applied.

At least one of the first and the second openings may be a square opening. At least one of the first and the second openings may be provided with a square opening having the same length on all sides of the opening, for example, on all four sides of the square opening.

The dosing opening may be a square opening. By the relative movement between the first and second members corner sections of the first and second openings provided opposite to each other may be moved in a closer or more distant position. The dosing opening may be provided with a quadratic opening shape (quadratic opening or hole).

A first type of shape of the dosing opening, if the first and second openings are in a first overlapping position, may be equal to a second type of shape of the dosing opening after the first and second openings moved to a second overlapping position different from the first overlapping position. In this case, by the relative movement between the first and second members (causing relative movement between the first and second openings) the type of shape of the opening does not change. For example, in the different relative positions between the first and second members the dosing opening may be provided with a square opening (shape). Still, depending on the relative position of the first and second members the dosing opening is provided with different opening size. Depending on the size of the dosing opening more or less granular material can pass through the doping dosing opening.

The first and second members may be configured to synchronously move while conducting the relative movement. With regard to such example or other embodiments, there may be a single actuator for moving both the first and the second members for relative movement. Alternatively, each of the first and second members may be assigned an individual actuator. The actuators may be controlled by a controller device, thereby, also allowing synchronized movement of the first and the second members.

A center portion of the dosing opening may be locally fixed while the relative movement of both the first and second members is conducted. The center of the dosing opening is kept in a non-moved or non-relocated position. If a spreading device located underneath of the assembly does not change its relative position to the assembly, such fixing of the center portion of the dosing opening may ensure keeping a center of the discharging of the granular material to the spreading device while the opening size of the dosing opening is adjusted by relative movement between the first and second members.

For providing the driving force for the relative movement between the first and second members, at least one of a cylinder extractable and retractable, and a toothed-wheel-rack mechanism may be provided. The cylinder may be provided with a hydraulic or a pneumatic cylinder. For the cylinder, a piston may be provided in chamber, the piston being connected to a piston rod which in operation can be extracted and retracted. With regard to the toothed-wheel-rack mechanism, the toothed-wheel may be driven by an electric motor. Two racks may be provided on opposite sides of the toothed-wheel, thereby, driving or moving both racks by rotating the toothed-wheel. The two racks may be connected to the first and the second members, thereby, causing relative movement between the first and second members if the toothed-wheel is driven.

At least one of the first member and the second member may be provided with a plate member. For this or other examples, the first and second members may be located above each other in a vertical direction. Plate members provided for both the and second members may be provided in a parallel position. It may be provided that the first and second members are sliding on each other in case of relative movement between the first and second members. With regard to the plate members or other embodiments, the first and second openings may be provided in a center area of the first and the second member, respectively.

The embodiments outlined above may apply to at least one of the dosing system and the spreader machine *mutatis mutandis.* The spreader machine may be an agricultural spreader machine for distributing, for example, a fertilizer.

### Description of further embodiments

Following, further embodiments are described in further detail by referring to figures. In the figures show:
- Fig. 1: a schematic representation of an arrangement of elements for a spreader machine for distributing a granular material or the like;
- Fig. 2: a schematic perspective view of an assembly for a dosing system of a spreader machine for distributing a granular material or the like;
- Fig. 3: a top view of the assembly in Fig. 2,
- Fig. 4: a perspective view from the bottom of the assembly in Fig. 2;
- Fig. 5: a bottom view of the assembly in Fig. 2;
- Fig. 6: a schematic top view of another assembly for a dosing system of a spreader machine for distributing a granular material or the like; and
- Fig. 7: a schematic bottom view of the further assembly from Fig. 6.

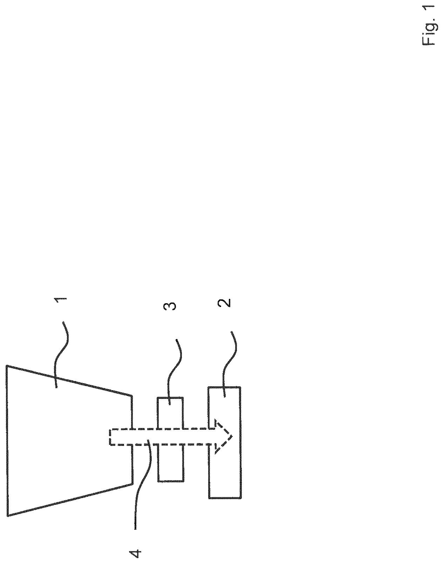

Fig. 1 shows a schematic representation of an arrangement for a spreader or distributor machine such as an agricultural spreader machine, for example, for distributing a fertilizer material. Granular material to be distributed is received in a storage container or tank 1 which may be carried, for example, by a tractor or may be provided on an implement. For spreading or distributing the granular material it is provided to a spreading device 2 comprising, for example, one or two spreader disks as it is known as such for different types of spreader devices. For having the granular material provided from the storage container 1 to the spreading device 2 depending on the work situation, a dosing system 3 is provided between the storage container 1 and the spreader device 2. The granular material to be distributed is provided from the storage container 1 to the dosing system 3 which will dose the granular material to the spreader device 2. This is schematically shown in Fig. 1 by an arrow 4.

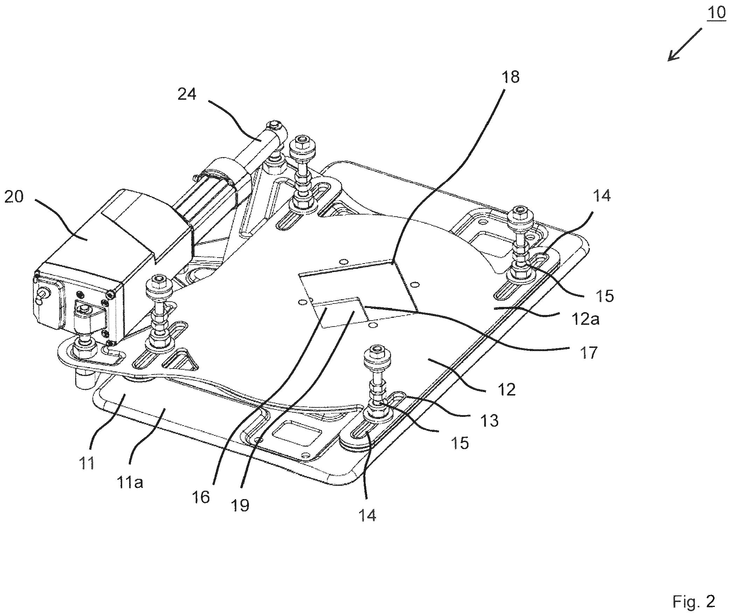

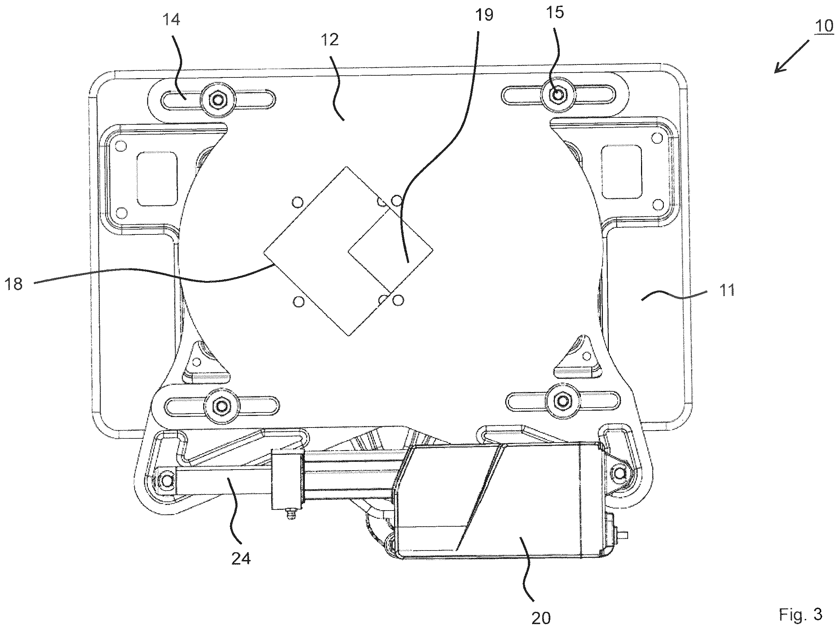

Following, with reference to Fig. 2 to 7 embodiments for an assembly for a dosing system for a spreader machine for distributing a granular material or the like are described. For example, the assembly may be applied in the arrangement depicted in Fig. 1.

Fig. 2 to 5 show an assembly 10 for a dosing system of a spreader machine. A first member 11 and a second member 12 are provided above each other. In the example shown in Fig. 1 the first and the second member 11, 12 are provided with a plate member 11a, 12a. The first and the second members 11, 12 are movable relative to each other. In case of movement there is a guiding mechanism 13 provided with guiding slots 14 and guiding pins 15 for guiding or supporting linear movement.

By the linear movement an overlapping area 16 in which a first opening 17 provided in the first member 11 and a second opening 18 provided in the second member 12 are overlapping, thereby, providing a dosing opening 19. Through the dosing opening 19 the granular material to be distributed or spread can pass on its way from the storage container 1 to the spreading device 2 (see Fig. 1). By adjusting the overlapping area 16 regarding its size the dosing of the granular material can be controlled.

In the example shown both the first and the second openings 17, 18 are provided with a square opening shape. Also, the dosing opening 19 does have a square shape which is kept in the different relative positions between the first and the second member 11, 12.

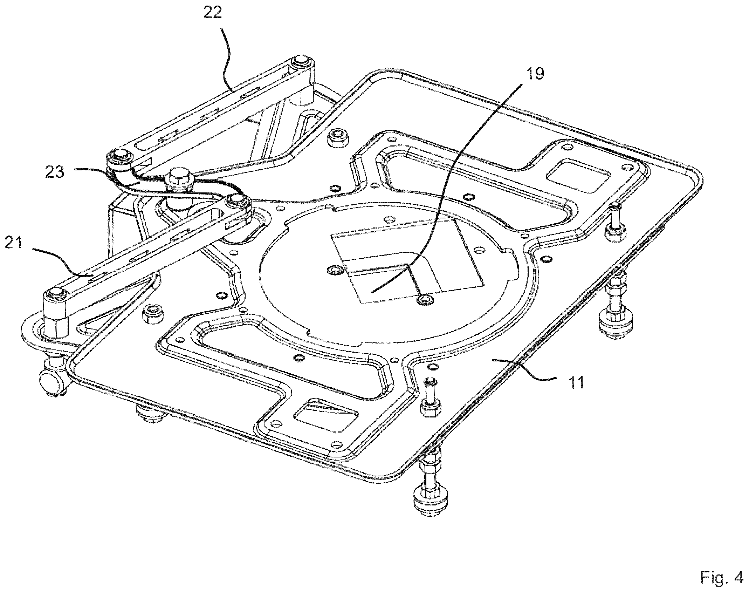

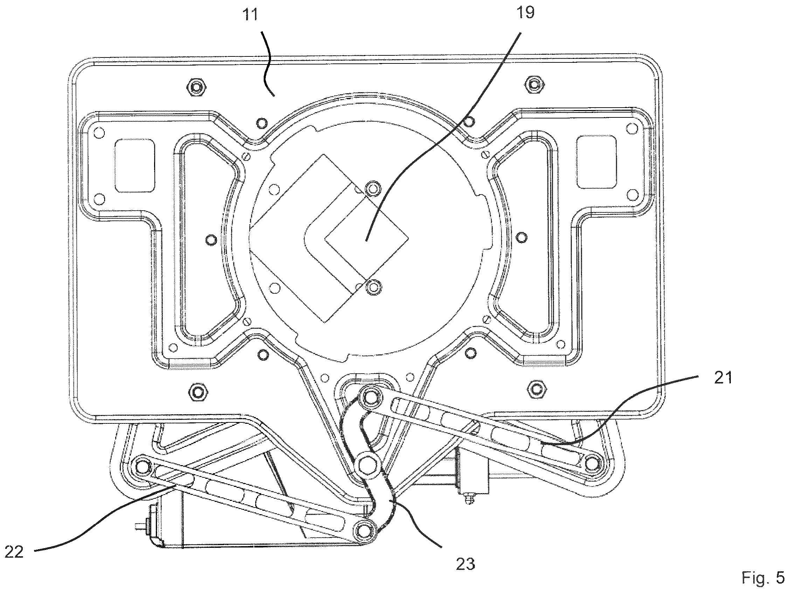

For causing relative linear movement between the first and the second members 11, 12 there is an actuator 20 coupling to both the first and the second members 11, 12. There are hinges 21, 22 connecting to a lever arm 23 (see Fig. 4 and 5). Consequently, if a rod element 24 of the actuator 20 is extracted or retracted both the first and the second member 11, 12 will be forced to linearly move, thereby, adjusting the size of the dosing opening 19. A center portion of the dosing opening 19 will be kept in the same position (not moving).

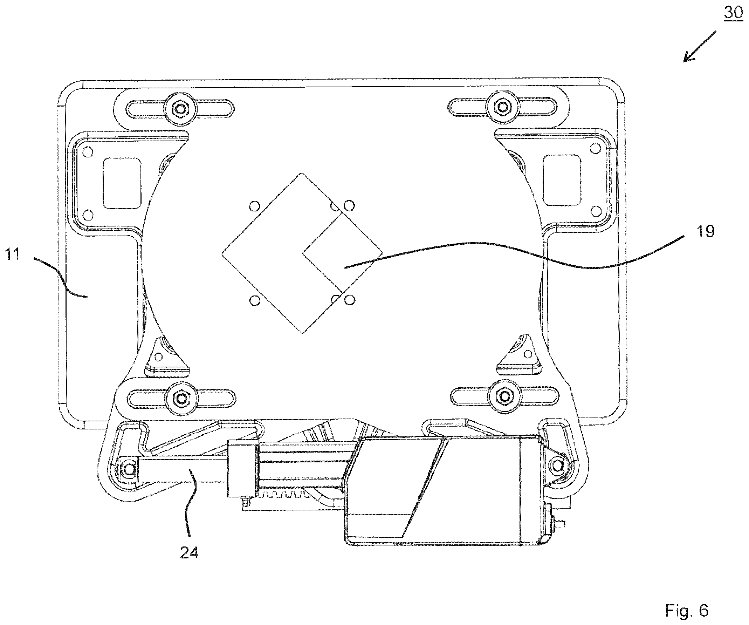

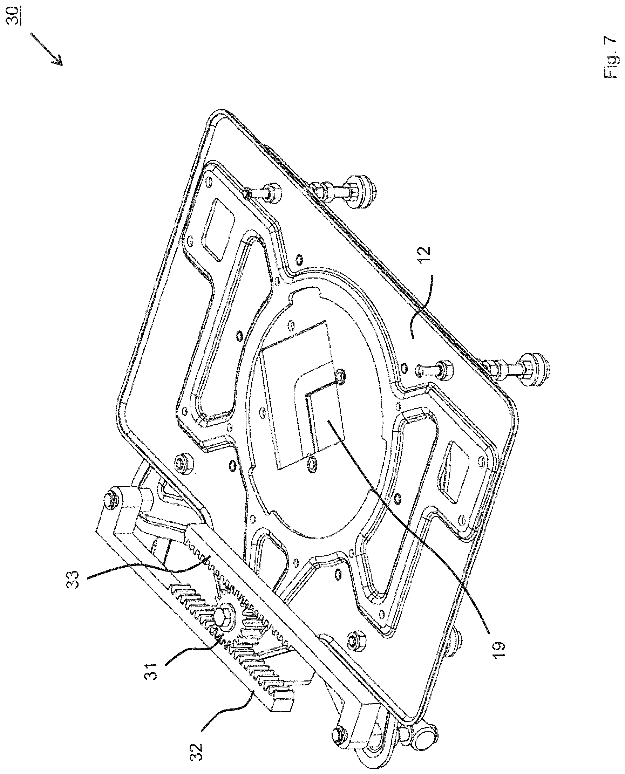

Referring to Fig. 6 and 7, another assembly for a dosing system of the spreader machine is depicted. In Fig. 6 and 7 the same reference numeral are applied to the same features like in Fig. 2 to 5. In step of the combination of the hinges 21, 22 and the lever arm 23 there is a toothed-wheel 31 interacting with two racks 32, 33 provided on opposite sides of the toothed-wheel 31. Again, if the actuator provides a driving force, both the first and the second members 11, 12 are linearly moved relative to each other.

## Claims

1. An assembly for a dosing system (3) of a spreader machine for distributing a granular material, comprising
- a first member (11) provided with a first opening (17);
- a second member (12) provided with a second opening (18); and
- an actuator (20) connected to at least one of the first and second members (11, 12) and configured to provide a driving force for relative movement between the first and second members (11, 12), thereby, adjusting an opening size of a dosing opening (19) provided by an overlapping area (16) in which the first and second openings (17, 18) are overlapping;
wherein the relative movement is conductable by linear movement of at least one of the first and second members (11, 12),
**characterized in that** the second member (12) is configured to be forced movable in response to linear movement of the first member (11), wherein the linear movement is driven by the actuator (20).

2. The assembly according to claim 1, further comprising a guiding mechanism (13) configured for linearly guiding at least one of the first and second members (11, 12) for the linear movement.

3. The assembly according to at least one of the preceding claims, further comprising a first hinge (21) connecting the actuator (20) to the first member (11).

4. The assembly according to claim 3, further comprising a second hinge (22) connecting the actuator (20) to the second member (12).

5. The assembly according to at least one of the preceding claims, wherein at least one of the first and the second openings (17, 18) is a square opening.

6. The assembly according to at least one of the preceding claims, wherein, if the first and second openings (17, 18) are in a first overlapping position, a first type of shape of the dosing opening (19) is equal to a second type of shape of the dosing opening (19) after the first and second openings (17, 18) moved to a second overlapping position different from the first overlapping position.

7. The assembly according to at least one of the preceding claims, wherein the first and second members (11, 12) are configured to synchronously move while conducting the relative movement.

8. The assembly according to claim 7, wherein a center portion (19a) of the dosing opening (19) is locally fixed while the relative movement of both the first and second members (11, 12) is conducted.

9. The assembly according to at least one of the preceding claims, wherein the actuator (20) comprises, for providing the driving force for the relative movement between the first and second members (11, 12), at least one of
- a cylinder extractable and retractable; and
- a toothed-wheel-rack mechanism.

10. The assembly according to at least one of the preceding claims, wherein at least one of the first member and the second member (11, 12) is provided with a plate member.

11. A dosing system (3) for a spreader machine for distributing a granular material or the like, comprising an assembly according to at least one of the preceding claims.

12. A spreader machine for distributing a granular material or the like, comprising
- a storage container (1) for receiving a granular material to be distributed;
- a spreading device (2) configured for distributing the granular material and
- a dosing system (3) according to claim 11 configured for dosing the granular material received from the storage container (1) to the spreading device (2).

## Patentansprüche

1. Baugruppe für ein Dosiersystem (3) einer Streumaschine zum Verteilen eines körnigen Materials, aufweisend
- ein erstes Element (11), das mit einer ersten Öffnung (17) versehen ist;
- ein zweites Element (12), das mit einer zweiten Öffnung (18) versehen ist; und
- ein Stellglied (20), das mindestens mit dem ersten Element (11) und / oder dem zweiten Element (12) verbunden ist, und eingerichtet ist, eine Antriebskraft für eine relative Bewegung zwischen dem ersten und dem zweiten Element (11, 12) bereitzustellen, wodurch eine Öffnungsgröße einer Dosieröffnung (19), welche durch einen überlappenden Bereich (16), in welchem die erste und die zweite Öffnung (17, 18) einander überlappen, bereitgestellt ist, eingestellt wird;
wobei die relative Bewegung durch Linearbewegung mindestens entweder des ersten (11) und / oder des zweiten Elements (12) ausführbar ist,
**dadurch gekennzeichnet, dass** das zweite Element (12) eingerichtet ist, als Reaktion auf Linearbewegung des ersten Elements (11) zwangsbewegt zu werden, wobei die Linearbewegung durch das Stellglied (20) angetrieben wird.

2. Baugruppe nach Anspruch 1, ferner aufweisend einen Führungsmechanismus (13), welcher dafür eingerichtet ist, mindestens entweder das erste (11) und / oder das zweite Element (12) bei der Linearbewegung linear zu führen.

3. Baugruppe nach mindestens einem der vorstehenden Ansprüche, ferner aufweisend ein erstes Gelenk (21), welches das Stellglied (20) mit dem ersten Element (11) verbindet.

4. Baugruppe nach Anspruch 3, ferner aufweisend ein zweites Gelenk (22), welches das Stellglied (20) mit dem zweiten Element (12) verbindet.

5. Baugruppe nach mindestens einem der vorstehenden Ansprüche, wobei mindestens entweder die erste (17) und / oder die zweite Öffnung (18) eine quadratische Öffnung ist.

6. Baugruppe nach mindestens einem der vorstehenden Ansprüche, wobei, falls die erste und die zweite Öffnung (17, 18) in einer ersten überlappenden Position angeordnet sind, eine erste Art von Form der Dosieröffnung (19) gleich einer zweiten Art von Form der Dosieröffnung (19) ist, nachdem die erste und die zweite Öffnung (17, 18) in eine zweite überlappende Position bewegt worden sind, welche sich von der ersten überlappenden Position unterscheidet.

7. Baugruppe nach mindestens einem der vorstehenden Ansprüche, wobei das erste und das zweite Element (11, 12) dafür eingerichtet sind, sich während der Ausführung der relativen Bewegung synchron zu bewegen.

8. Baugruppe nach Anspruch 7, wobei ein mittlerer Abschnitt (19a) der Dosieröffnung (19) ortsfest angeordnet ist, während die relative Bewegung des ersten und des zweiten Elements (11, 12) ausgeführt wird.

9. Baugruppe nach mindestens einem der vorstehenden Ansprüche, wobei das Stellglied (20) zum Bereitstellen der Antriebskraft für die relative Bewegung zwischen dem ersten (11) und dem zweiten Element (12) mindestens eines der Elemente aus der Gruppe umfassend
- einen ausziehbaren und einziehbaren Zylinder; und
- einen Zahnrad-Zahnstangen-Mechanismus aufweist.

10. Baugruppe nach mindestens einem der vorstehenden Ansprüche, wobei mindestens entweder das erste (11) und / oder das zweite Element (12) mit einem Plattenelement versehen ist.

11. Dosiersystem (3) für eine Streumaschine zum Verteilen eines körnigen Materials oder dergleichen, aufweisend eine Baugruppe nach mindestens einem der vorstehenden Ansprüche.

12. Streumaschine zum Verteilen eines körnigen Materials oder dergleichen, aufweisend
- einen Vorratsbehälter (1) zum Aufnehmen eines körnigen Materials, welches zu verteilen ist;
- eine Streuvorrichtung (2), eingerichtet zum Verteilen des körnigen Materials und
- ein Dosiersystem (3) nach Anspruch 11, welches dafür eingerichtet ist, das vom Vorratsbehälter (1) empfangene körnige Material zur Streuvorrichtung (2) zu dosieren.

## Revendications

1. Ensemble pour un système de dosage (3) d'une machine d'épandage pour distribuer un produit granulaire, comprenant :
- un premier élément (11) doté d'une première ouverture (17) ;
- un deuxième élément (12) doté d'une deuxième ouverture (18) ; et
- un actionneur (20) relié à au moins l'un parmi les premier et deuxième éléments (11, 12) et configuré pour fournir une force d'entraînement pour le mouvement relatif entre les premier et deuxième éléments (11, 12) en ajustant ainsi une taille d'ouverture d'une ouverture de dosage (19) fournie par une zone de chevauchement (16) où les première et deuxième ouvertures (17, 18) sont en chevauchement ;
dans lequel le mouvement relatif est exécutable par un mouvement linéaire d'au moins l'un parmi les premier et deuxième éléments (11, 12),
**caractérisé en ce que** le deuxième élément (12) est configuré pour être mobile de manière forcée en réponse au mouvement linéaire du premier élément (11) ; dans lequel le mouvement linéaire est commandé par l'actionneur (20).

2. Ensemble selon la revendication 1, comprenant en outre un mécanisme de guidage (13) configuré pour guider linéairement au moins l'un parmi les premier et deuxième éléments (11, 12) pour le mouvement linéaire.

3. Ensemble selon l'une au moins des revendications précédentes, comprenant en outre une première articulation (21) reliant l'actionneur (20) au premier élément (11).

4. Ensemble selon la revendication 3, comprenant en outre une deuxième articulation (22) reliant l'actionneur (20) au deuxième élément (12).

5. Ensemble selon l'une au moins des revendications précédentes, dans lequel au moins l'une parmi les première et deuxième ouvertures (17, 18) est une ouverture carrée.

6. Ensemble selon l'une au moins des revendications précédentes, dans lequel, si les première et deuxième ouvertures (17, 18) sont dans une première position de chevauchement, un premier type de forme de l'ouverture de dosage (19) est égal à un deuxième type de forme de l'ouverture de dosage (19) après le déplacement des première et deuxième ouvertures (17, 18) dans une deuxième position de chevauchement différente de la première position de chevauchement.

7. Ensemble selon l'une au moins des revendications précédentes, dans lequel les premier et deuxième éléments (11, 12) sont configurés pour se mouvoir de manière synchrone tout en effectuant le mouvement relatif.

8. Ensemble selon la revendication 7, dans lequel une partie centrale (19a) de l'ouverture de dosage (19) est fixée localement alors que le mouvement relatif à la foi des premier et deuxième éléments (11, 12) est effectué.

9. Ensemble selon l'une au moins des revendications précédentes, dans lequel l'actionneur (20) comprend, pour la fourniture de la force d'entraînement pour le mouvement relatif entre les premier et deuxième éléments (11, 12), au moins l'un parmi :
- un cylindre extensible et rétractable ; et
- un mécanisme à roue dentée et crémaillère.

10. Ensemble selon l'une au moins des revendications précédentes, dans lequel au moins l'un parmi les premier et deuxième éléments (11, 12) est doté d'un élément de plaque.

11. Système de dosage (3) pour une machine d'épandage pour distribuer un produit granulaire ou similaire, comprenant un ensemble selon l'une au moins des revendications précédentes.

12. Machine d'épandage pour distribuer un produit granulaire ou similaire, comprenant :
- un réservoir de stockage (1) pour recevoir un produit granulaire à distribuer ;
- un dispositif d'épandage (2) configuré pour distribuer le produit granulaire et
- un système de dosage (3) selon la revendication 11 configuré pour le dosage du produit granulaire reçu du réservoir de stockage (1) vers le dispositif d'épandage (2).
